**Europäisches Patentamt**

**European Patent Office**

**Office européen des brevets**

(11) Veröffentlichungsnummer: **0 166 123**
A2

# (12) EUROPÄISCHE PATENTANMELDUNG

(21) Anmeldenummer: **85105350.4**

(22) Anmeldetag: **02.05.85**

(51) Int. Cl.⁴: **B 60 C 23/12**

(30) Priorität: **23.06.84 DE 3423318**

(43) Veröffentlichungstag der Anmeldung: **02.01.86**
**Patentblatt 86/1**

(84) Benannte Vertragsstaaten: **DE FR GB IT**

(71) Anmelder: **Dr.Ing.h.c. F. Porsche Aktiengesellschaft, Porschestrasse 42, D-7000 Stuttgart 40 (DE)**

(72) Erfinder: **Bott, Helmuth, Ritterstrasse 2, D-7530 Pforzheim (DE)**

(54) **Druckluftversorgungseinrichtung für eine Reifendruckregelanlage.**

(57) Es wird eine Druckluftversorgungseinrichtung vorgeschlagen, die eine Pumpe umfaßt, welche mit dem Rad verbunden ist und über Nocken an der Achse betätigt wird. Über eine Regeleinrichtung wird bei Luftdruckabfall im Reifen über die Pumpe dem Reifen entsprechend Luft zugeführt.

EP 0 166 123 A2

Druckluftversorgungseinrichtung
für eine Reifendruckregelanlage

Die Erfindung bezieht sich auf eine Druckluftversorgungseinrichtung nach dem Oberbegriff des Anspruchs 1.

Es ist bei einem Fahrzeug wünschenswert, daß der Druck der
Reifen auch während der Fahrt einstellbar ist, wozu eine mit
einer Druckquelle zusammenarbeitende Luftdruckregelanlage sowie
ein Luftdruckkontrollsystem dient. Hierdurch ist es beispielsweise möglich, einen ungenügenden Druck während der Fahrt auszugleichen. Auch wird erreicht, den Reifendruck den verschiedenen Oberflächenzuständen der Straßen und Wege anzupassen, so daß z.B. beim Fahren auf der Autobahn ein relativ
hoher Luftdruck und beim Fahren auf holperigen Strassen oder im
Gelände ein niedriger Luftdruck einstellbar ist. Als Druckquelle dient meist eine Pumpe, die ortsfest im Fahrzeug
angeordnet ist und über Zuführleitungen mit dem Reifenhohlraum
verbunden wird. Die Verbindung der feststehenden Leitung mit
dem drehenden Rad bedingt zum Einführen der Luft von der Pumpe
in den Reifenhohlraum eine aufwendige Drehdurchführung zum Rad.

Der Erfindung liegt die Aufgabe zugrunde, eine Einrichtung der
eingangs genannten Art zu schaffen, die in der Weise im
Fahrzeug unterzubringen ist, daß eine einfache Zuführung der
Luft von der Druckquelle in den Reifenhohlraum bei guter
Wirksamkeit realisierbar ist.

Diese Aufgabe wird erfindungsgemäß durch die kennzeichnenden
Merkmale des Anspruchs 1 gelöst. Weitere vorteilhafte Merkmale
beinhalten die Unteransprüche.

Die mit der Erfindung hauptsächlich erzielten Vorteile bestehen
darin, daß durch die Lagerung der Pumpe am Rad die Luftzuführung in den Reifenhohlraum über die Übertragungsleitungen
unmittelbar erfolgt und besondere Drehverbindungen zwischen Rad und Leitung nicht erforderlich sind. Die Betätigung der Kolbenpumpe erfolgt in einfacher Weise mittels Nocken oder dergleichen, die auf der feststehenden Radachse vorgesehen sind. Es wird durch diese Anordnung der Pumpe am Rad sowie der Nocken auf der Achse eine kompakte Einrichtung geschaffen, die geschützt innerhalb des Rades angeordnet ist. Vorzugsweise ist sie im Radkörper oder an sonstigen Bauteilen des Radkörpers gehalten. Zum Ausgleich der Massen können die Pumpen auch gegenüberliegend angeordnet sein.

Nach einer weiteren Ausführung gemäß Anspruch 5 ist auch eine Trochoidenpumpe denkbar, die einen Pumpenläufer umfasst, der von einer feststehenden Radnabe gebildet oder auf dieser angeordnet ist. Der zugehörige Pumpenring ist umlaufend und von oder in einem mit dem Rad gemeinsam rotierenden Bauteil gehalten. Auch diese Pumpe ist kompakt bauend und die Übertragungsleitungen münden unmittelbar in den Reifenhohlraum ein, ohne daß eine aufwendige Drehverbindung erforderlich wird.

Insbesondere ist die Druckluftversorgungseinrichtung bei einem Rad mit hohl ausgeführten Speichen günstig anwendbar, da der Weg der Übertragungsleitung von der Pumpe in den Speichenhohlraum relativ kurz ist.

Ausführungsbeispiele der Erfindung sind in der Zeichnung dargestellt und werden im folgenden näher beschrieben.
Es zeigt
Fig. 1    ein Rad mit einer Kolbenpumpe im Schnitt,
Fig. 2    eine Reifendruckregelanlage,
Fig. 3    eine weitere Ausführung einer Druckluftversorgungseinrichtung mit einer Trochoidenpumpe im Schnitt, und
Fig. 4    einen Schnitt nach der Linie IV-IV der Fig. 3.

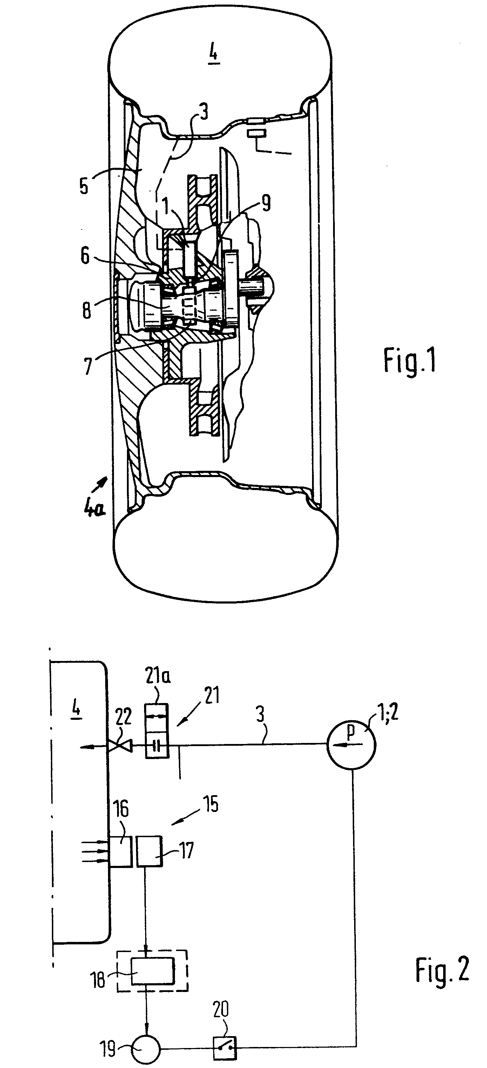

Die Druckluftversorgungseinrichtung umfasst eine Pumpe 1; 2, die über eine Leitung 3 einem Reifenhohlraum 4 Luft zuführt. Die Pumpe 1 gemäß Fig. 1 ist als Kolbenpumpe ausgeführt und innerhalb einer Radschüssel 5 gelagert und wird in der mit dem Rad 4a
drehenden Nabe 6 gehalten. Der Pumpe 1 gegenüberstehend sind
ein oder mehrere Nocken 7 vorgesehen, die auf der Radachse 8
angeordnet sind. Von diesen Nocken 7 wird die Kolbenstange 9
betätigt, welche endseitig mit einer Rolle oder dergleichen
ausgeführt ist. Zum Massenausgleich sind vorzugsweise zwei
Pumpen 1 vorgesehen, die gegenüberstehend angeordnet sind.

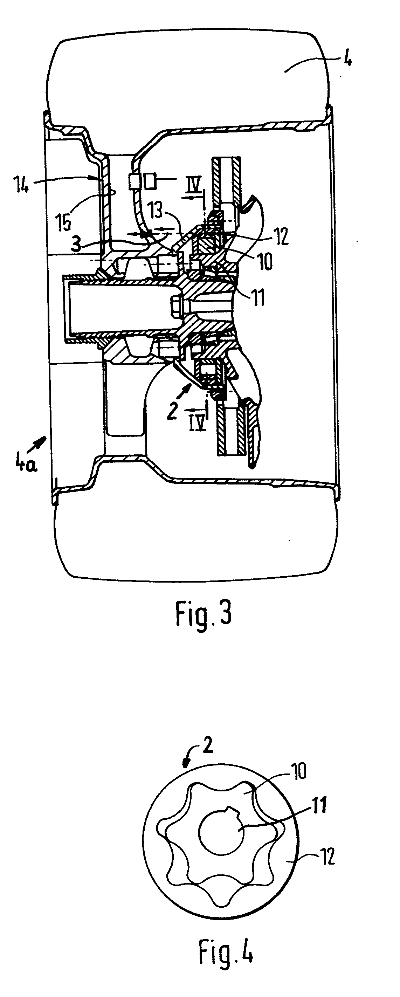

Nach einer weiteren Ausführung der Erfindung gemäß der Fig. 3
und 4 kann die Pumpe z.B. auch als Trochoidenpumpe 2 oder einer
ähnlichen Art von Pumpe ausgeführt sein. Bei einer derartigen
Pumpe wird der Läufer 10 auf der feststehenden Achsnabe 11
angeordnet und der Pumpengering 12 ist in einem radseitigen
Bauteil 13 gehalten. Über die Luftleitung 3 ist die Pumpe mit
dem Reifenhohlraum 4 verbunden. Die Ausführung mit der Pumpe 2
ist raumgünstig in einer Felge 14 mit hohlen Speichen 15
anzuordnen. Es ist aber auch im Rahmen der Erfindung möglich,
in eine derartige Felge 14 eine Kolbenpumpe 1 gemäß der
Ausführung Fig. 1 einzusetzen, wobei die Pumpe 1 im Bauteil 13
gehalten wird und die Nocken auf der Achsnabe 11 ausgebildet
sind.

Zum Regeln des Luftdrucks ist mit der Druckluftversorgungseinrichtung (Pumpe 1; 2) ein Kontrollsystem 15 gekoppelt, das
im wesentlichen ein radfestes Meßelement 16 und einen ortsfesten Geber 17 sowie eine nicht dargestellte Auswerteelektronik umfasst. Bei Abfall des Luftdrucks im Reifenhohlraum
4 wird über das Konstrollsystem 15 einer Überwachungs- und
Steuereinrichtung 18 ein Signal gegeben, das zur Anzeige im
Gerät 19 kommt. Über einen Luft-Wählschalter 20 wird die Pumpe
1; 2 in Betrieb gesetzt und fördert über die Leitung 3 Luft zum
Steuerventil 21a über das Rückschlagventil 22 in den Reifenhohlraum 4. Nach Erreichen des vorgewählten Luftdrucks wird die
Luftförderung der Pumpe 1; 2 eingestellt. Dies kann durch
Trennung der Wirkverbindung zur Pumpe und Nocken erreicht
werden oder durch ein Abblasen der Luft über einen Auslaß
in der Leitung 3 vor der Ventileinheit 21.

0166123

Patentansprüche


1. Druckluftversorgungseinrichtung für eine Reifendruckregelanlage zur Aufrechterhaltung und Änderung des Luftdrucks
im Fahrzeugrad während der Fahrt mittels einer Pumpe, wobei
die Einrichtung mit einem Luftdruckkontrollsystem zusammenarbeitet, das ein radseitiges Meßelement und einen ortsfesten
Geber umfasst, der mit einer Schalteinrichtung für die
Luftdruckregelung verbunden ist, dadurch gekennzeichnet, daß
die Pumpe (1; 2) der Einrichtung Elemente umfaßt, welche durch
dem Fahrzeugrad (4a) und einem feststehenden Radteil (8; 11)
zugeordnete Bauteile (7; 10) gebildet werden.


2. Einrichtung nach Anspruch 1, dadurch gekennzeichnet, daß die
Pumpe (1) als Kolbenpumpe ausgeführt ist und in einer Nabe (6)
des Rades (4a) gehalten wird und eine Betätigung der Pumpe (1)
mittels einer oder mehrerer auf der feststehenden Radachse (8)
angeordneten Nocken (7) erfolgt, die hubbeeinflussend mit der
Kolbenstange (9) zusammenarbeiten.


3. Einrichtung nach den Ansprüchen 1, 2 oder 3, dadurch gekennzeichnet, daß die mit dem Rad (4a) drehenden Elemente der
Pumpe (1; 2) mit Übertragungsleitungen (3) verbunden sind,
die in einen Reifenhohlraum (4) einmünden.


4. Einrichtung nach Anspruch 1, dadurch gekennzeichnet, daß die
Pumpe (2) als Trochoidenpumpe ausgeführt ist, deren Pumpenläufer (10) auf einer Nabe (11) des Rades (4a) gehalten wird
und ein den Läufer (10) umgebender Pumpenring (12) mit einem
drehenden Bauteil (13) des Rades (4a) verbunden ist.

0166123

5. Einrichtung nach einem oder mehreren der vorhergehenden Ansprüche, dadurch gekennzeichnet, daß zur Ansteuerung der Pumpe (1; 2) bei einer Reifendruckänderung eine Überwachungs- und Steuereinrichtung (18) dient, die mit dem Luftdruckkontrollsystem (15) verknüpft ist und daß die Einrichtung (18) unter Zwischenschaltung einer Anzeigevorrichtung (19) und eines Luftdruckwählschalters (20) mit der Pumpe (1; 2) regelnd verbunden ist.

6. Einrichtung nach Anspruch 5, dadurch gekennzeichnet, daß in der Übertragungsleitung (3) zwischen der Pumpe (1; 2) und dem Reifenhohlraum (4) die Ventileinheit (21) vorgesehen ist, welche ein Steuerventil (21a) mit einem stromab nachgeschalteten Rückschlagventil (22) umfasst.

Y65₁
0166123

Fig.1

Fig.2

Y652
0166123

Fig.3

Fig.4